# EUROPEAN PATENT SPECIFICATION

(11) **EP 3 007 890 B1**
(45) Date of publication and mention of the grant of the patent: **23.08.2017**
(21) Application number: 14730820.9
(22) Date of filing: 06.06.2014
(51) Int. Cl.: B29D 30/06

(54) **MOULDING ELEMENT COMPRISING CUTTING MEANS FOR MOULDING AND VULCANIZING A TYRE TREAD**
FORMTEIL MIT SCHNEIDEMITTELN ZUM FORMEN UND VULKANISIEREN EINER REIFENLAUFFLÄCHE
ÉLÉMENT DE MOULAGE COMPRENANT DES MOYENS DE DÉCOUPE POUR MOULER ET VULCANISER LA BANDE DE ROULEMENT D'UN PNEU

(30) Priority: 14.06.2013 EP 13172040
(43) Date of publication of application: 20.04.2016
(73) Proprietor: Compagnie Générale des Etablissements Michelin, 63000 Clermont-Ferrand (FR)
(72) Inventor: OHASHI, Tetsuo, Tokyo 163-1073 (JP)
(74) Representative: Demaure, Pierre-Yves
(86) International application number: PCT/EP2014/061802
(87) International publication number: WO 2014/198654

(56) References cited:
- WO-A1-2006/069912
- WO-A1-2013/087826
- WO-A1-2013/087829
- GB-A- 1 124 915
- US-A- 3 432 888
- US-A- 4 553 918

## Description

### FIELD OF THE INVENTION

The present invention relates to the field of moulds for moulding and vulcanizing a tyre tread. More specifically, the invention relates to the moulds used for moulding in the tread grooves which are partially or completely covered by an additional cover layer.

### PRIOR ART

It is known practice to design tyres the tread of which comprises various rubber compounds. Document WO 03089257 discloses such treads. More specifically, document WO 03089257 discloses a tread comprising grooves the walls of which are covered with a cover layer. The material of which this cover layer is made differs from the rubber compound of which the tread is made. This material notably has much better wet grip than the wet grip of the rubber compound. This allows a very significant improvement in cornering performance on wet ground.

Document US 4553918 - A discloses a moulding element comprising a rib (6) intended to mould a groove in the tread and two blades positioned at defined distances on either side of the rib.

Also document US 3432888 - A discloses such a moulding element, wherein the blades intended to mould sipes or grooves are represented by the elements (16) and the cutting means are represented by the elements (17).

Document GB 1124915 - A discloses the moulding of tread grooves covered with an additional cover layer, wherein the cover layer is pushed in the grooves by the rib and groove forming portions of the curing mould. No cutting step of the cover layer by cutting means is disclosed.

One way of manufacturing this tread is notably disclosed in document WO 2006069912. According to this method of manufacture, in a first step, provision is made for the material intended to constitute a cover layer to be injected in the form of one or more inserts into the green tyre using an injection nozzle. The insert or inserts is or are then shaped, in a second step, by ribs of a vulcanizing mould so that they cover all or part of the walls of the grooves moulded by these ribs.

This method of manufacture has its limits, particularly as far as obtaining precision mouldings is concerned. Specifically, during the shaping thereof, the insert experiences a significant shear force from the rib in order to convert this insert into a layer of lesser thickness. This shear force may cause cracking within the insert, making it more difficult to control the movements of the material of which this insert is made. The shape and the thickness of the cover layer thus formed may therefore be somewhat haphazard. The advantages afforded by the additional layer to the performance of the tyre are then reduced.

In addition, in this method of manufacture, it is necessary to make the inserts align with the ribs. This makes manufacture of the tread more complicated.

There is therefore a need to improve the incorporation of a cover layer on the walls of grooves of a tyre tread.

### DEFINITIONS

A "tyre" means all types of elastic tyre whether or not subjected to an internal pressure.

A "green tyre" or "green form" of a tyre means a superposition of a plurality of semi-finished rubber products present in the form of strips or sheets, with or without reinforcement. The green tyre is intended to be vulcanized in a mould in order to obtain the tyre.

The "tread" of a tyre means a quantity of rubber material bounded by lateral surfaces and by two main surfaces one of which is intended to come into contact with a road surface when the tyre is running.

A "tread surface" means the surface formed by those points on the tyre tread that come into contact with the road surface when the tyre is running.

A "mould" means a collection of separate moulding elements which, when brought closer towards one another, delimit a toroidal moulding space.

A "moulding element" of a mould means part of a mould. A moulding element is, for example, a mould segment.

A "moulding surface" of a moulding element means the surface of the mould that is intended to mould the surface of the tyre tread.

A "blade" of a moulding element means a protrusion projecting from the moulding surface. In the blades category, a distinction is made between sipe blades which are less than 2 mm wide and ribs which have a width of 2 mm or more. Sipe blades are intended to mould sipes in the tyre tread, which means cuts which at least partially close up when they fall within the contact patch where the tyre makes contact with the ground. The ribs are intended to mould grooves in the tread, which means cuts which do not close up when they fall within the contact patch in which the tyre makes contact with the ground.

### SUMMARY OF THE INVENTION

The invention relates to a moulding element of a mould for moulding and vulcanizing a tyre tread, as defined in claim 1, this tread comprising a tread surface intended to come into contact with the ground when the tyre is rolling. The moulding element comprises a moulding surface intended to mould part of the tyre tread surface and a blade intended to mould a sipe or a groove in the tread. The moulding element comprises two lamella positioned on either side of the blade at a certain distance from this blade, each lamella comprising a bulge at one extremity far away from the moulding surface. Indeed, each lamella comprises cutting means extending from the bulge.

The cutting means are able to cut a cover layer that covers a green tyre. The blade itself will mould a groove in the tread and at the same time guide part of the cover layer into the groove thus moulded.

The invention proposes that the cover layer is cut and some parts of this layer are positioned within the depth of the green tyre during one and the same movement of the moulding element with respect to the green tyre.

The cutting means can create a stress concentration at cutting means connection area. That stress causes block chipping during tyre rolling and crack initiation risk in the deep of the tread band. By applying a bulge at the base of the cutting means, the inventors have discovered that the stress concentration is reduced during tyre rolling.

In an alternative form of the embodiment, as defined in claim 2, the lamella extend in a direction of extension X, and the cutting means are continuous along this direction of extension X.

Continuous cutting means improve the operation of cutting the cover layer.

In another alternative form of the embodiment, as defined in claim 3, the cutting means comprise a plurality of sharped teeth.

With the lamella, there is a space between two consecutive teeth. This space create a gum bridge between two cavities moulded by the teeth. This gum bridge limits also the risk of initiating cracks.

### BRIEF DESCRIPTION OF THE DRAWINGS

Other features and advantages of the invention will emerge from the following description, given by way of non-limiting example, with reference to the attached drawings in which:
- **Figure 1** is a sectional drawing depicting schematically a moulding element according to the invention;
- **Figure 2** illustrates a lamella of the moulding element of **Fig.1****,** according to a first embodiment of the invention ;
- **Figure 3** illustrates a lamella of the moulding element of **Fig.1****,** according to a second embodiment of the invention ;
- **Figure 4** illustrates a step of a method of manufacturing using the moulding element of **Fig.1****,** in which a cover layer is cut by cutting means belonging to the lamella ;
- **Figure 5** illustrates a step of the method of manufacturing using the moulding element of **Fig.1****,** in which a blade drives a cut part of the cover layer into the green tyre;
- **Figure 6** illustrates a step of the method of manufacturing using the moulding element of **Fig.1****,** in which blade and lamella are totally embedded in the green tyre;
- **Figure 7** is a sectional drawing depicting schematically a tyre tread with a raised element partially covered by a cover layer, after using the moulding element of **Fig.1****.**

In the description that follows, elements that are substantially identical or similar will be denoted by identical references.

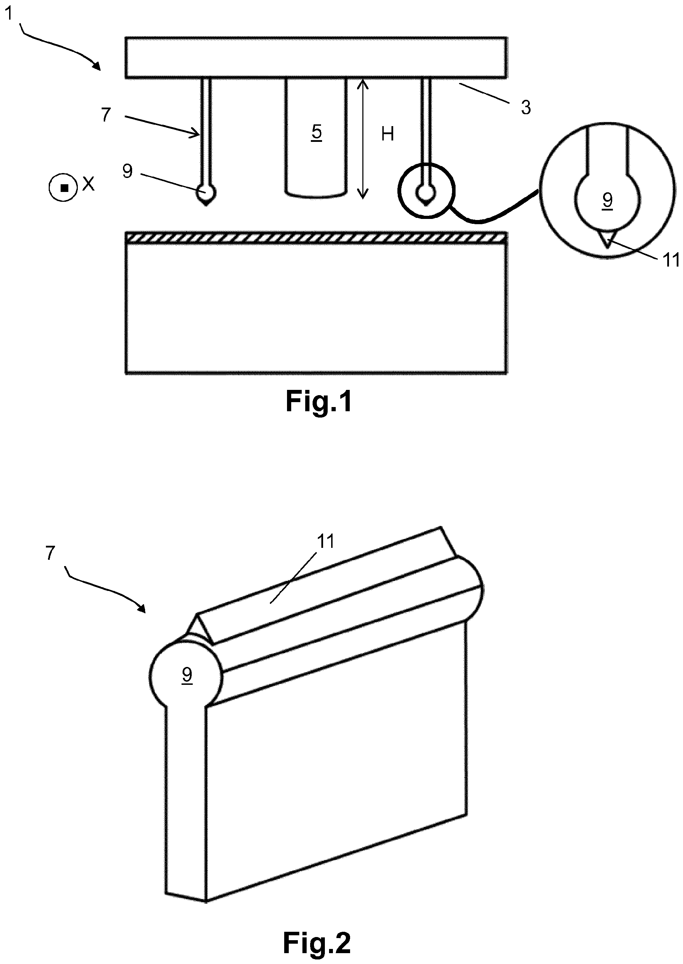

**Figure 1** depicts a moulding element 1 for implementing a method of manufacture according to the invention.

More specifically, the moulding element 1 comprises a moulding surface 3 intended to mould part of the tread surface of a tyre. The moulding element 1 also comprises blades 5 of which just one is depicted here to make the invention easier to understand. The blade in this instance is a rib 5 intended to mould a groove in the tyre tread. A "groove" in a tread means a cut in this tread of a width, i.e. the distance separating two lateral walls of this groove, greater than 2 mm. The rib 5 extends heightwise and projects from this moulding surface 3 with an height H. The rib 5 also extends lengthwise in a direction of extension X. In the mould, this direction X may be a circumferential direction following the circumference of the mould. As an alternative, the direction of extension X is a transverse direction perpendicular to the circumferential direction of the mould. In another alternative form, this direction of extension is an oblique direction making a non-zero angle with the circumferential direction and with the transverse direction of the mould.

The moulding element 1 of **Figure 1** also has two lamella 7 arranged either side of the rib 5. These lamella extend lengthwise in a direction parallel to the direction of extension X of the rib 5. A "parallel direction" means that the direction of extension of the cutting means makes an angle of between -5° and +5° with the direction of extension X of the rib. Each lamella comprises a bulge 9 at one extremity far away from the moulding surface 3 and each lamella comprises cutting means 11 extending from the bulge.

**Figure 2** illustrates lamella 7 comprising cutting means 11 continuously extending along the direction of extension X.

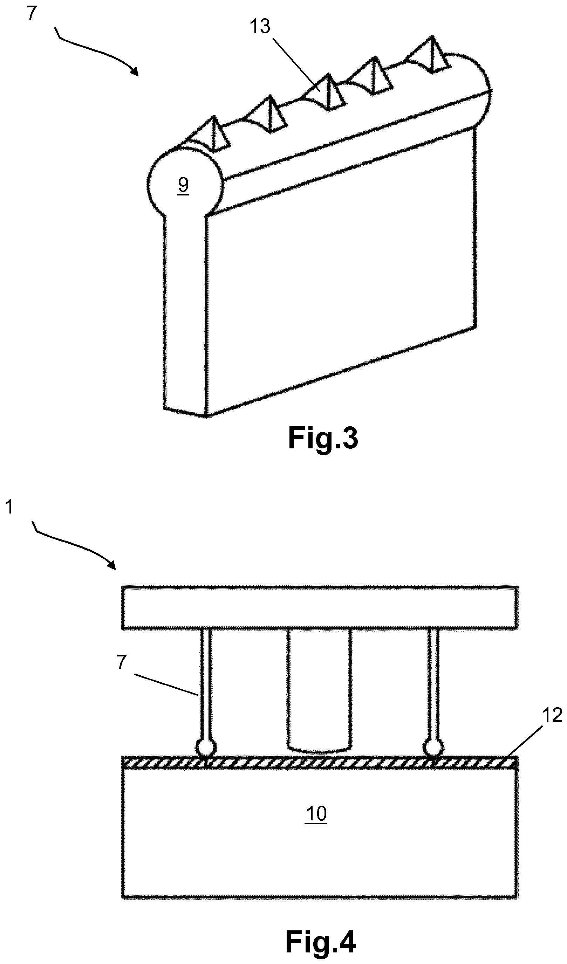

**Figure 3** illustrates another embodiment of lamella 7. In this embodiment, the cutting means 11 comprise a plurality of sharped teeth 13.

**Figure 4** to **Figure 7** illustrates the different steps of a method of manufacturing a tyre tread using a moulding element according to the invention.

**Figure 4** discloses a step in which the cover layer 12 is cut by the lamella 7. In this step, the moulding element 1 and the green tyre 10 move closer to one another. This movement is, for example, initiated by a membrane (not depicted) in the mould. Under the action of a quantity of pressurized steam, this membrane swells and pushes the green tyre towards the moulding element 1.

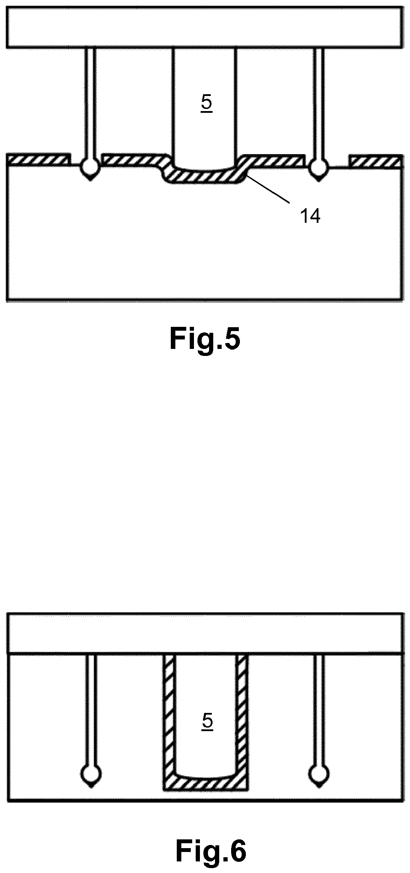

**Figure 5** illustrates a step whereby the blade 5 drives part 14 of the cover layer into the green tyre.

**Figure 6** illustrates an intermediate moulding step in which the rib 5 is pushed into the green tyre over its entire height. The entirety of the cover layer thus finds itself inside the green tyre. Once this step has been performed, it is then possible to vulcanize the green tyre, i.e. to convert the rubber material of which the green tyre is made from the plastic state to the elastic state. This vulcanizing step may also modify the internal structure of the cover layer.

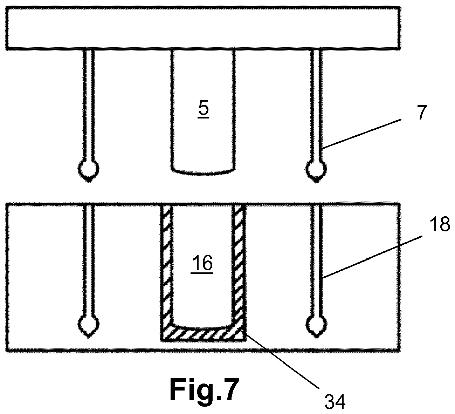

**Figure 7** depicts the result of the various steps of moulding and vulcanizing the green tyre illustrated in **Figures 4** to **Figure 6****.** The part of the tread thus obtained comprises a groove 16 obtained by moulding rubber around the rib 5 and two sipes 18 obtained by moulding rubber around the two lamella 7. It will be noted here that all of the walls of the groove, i.e. the lateral walls and the bottom wall flanked by the lateral walls, are covered with the cut part 14 of the cover layer.

The invention is not restricted to the examples described and depicted and various modifications can be made thereto without departing from its scope.

## Claims

1. Moulding element of a mould for moulding and vulcanizing a tyre tread, this tread comprising a tread surface intended to come into contact with the ground when the said tyre is rolling, this moulding element (1) comprising a moulding surface (3) intended to mould part of the tyre tread surface and a blade (5) intended to mould a sipe or a groove in the tread, **characterized in that** the moulding element comprises two lamella (7) positioned on either side of the blade (5) at a certain distance from this blade, each lamella comprising a bulge (9) at one extremity far away from the moulding surface (3) and **in that** each lamella comprises cutting means (11) extending from the bulge.

2. Moulding element according to Claim 1, in which each lamella extends in a direction of extension X, **characterized in that** the cutting means (11) are continuous along this direction of extension X.

3. Moulding element according to Claim 1, **characterized in that** the cutting means (11) comprise a plurality of sharped teeth (13).

## Patentansprüche

1. Formelement eines Formwerkzeugs zum Formen und Vulkanisieren einer Reifenlauffläche, wobei diese Lauffläche eine Laufflächenoberfläche umfasst, die dazu bestimmt ist, mit dem Boden in Kontakt zu kommen, wenn der Reifen rollt, wobei dieses Formelement (1) eine Formfläche (3), die dazu bestimmt ist, einen Teil der Reifenlaufflächenoberfläche zu formen, und eine Klinge (5), die dazu bestimmt ist, einen Lamelleneinschnitt oder eine Rille in der Lauffläche zu formen, umfasst, **dadurch gekennzeichnet, dass** das Formelement zwei Lamellen (7) umfasst, die auf beiden Seiten der Klinge (5) in einem bestimmten Abstand zur Klinge positioniert sind, wobei jede Lamelle einen Wulst (9) an einem Ende weit von der Formfläche (3) weg umfasst, und dass jede Lamelle Schneidmittel (11) umfasst, die sich von dem Wulst erstrecken.

2. Formelement nach Anspruch 1, bei dem sich jede Lamelle in einer Erstreckungsrichtung X erstreckt, **dadurch gekennzeichnet, dass** die Schneidmittel (11) in dieser Erstreckungsrichtung X durchgehend sind.

3. Formelement nach Anspruch 1, **dadurch gekennzeichnet, dass** die Schneidmittel (11) mehrere scharfe Zähne (13) umfassen.

## Revendications

1. Élément de moulage d'un moule servant à mouler et vulcaniser une bande de roulement de pneumatique, cette bande de roulement comprenant une surface de bande de roulement destinée à venir en contact avec le sol lorsque ledit pneumatique roule, cet élément de moulage (1) comprenant une surface de moulage (3) destinée à mouler une partie de la surface de bande de roulement de pneumatique et une lame (5) destiné à mouler une lamelle ou un sillon dans la bande de roulement, **caractérisé en ce que** l'élément de moulage comprend deux lamelles (7) positionnées de chaque côté de la lame (5) à une certaine distance de cet lame, chaque lamelle comprenant un renflement (9) à une extrémité distante de la surface de moulage (3) et **en ce que** chaque lamelle comprend des moyens de coupe (11) s'étendant à partir du renflement.

2. Élément de moulage selon la revendication 1, dans lequel chaque lamelle s'étend dans une direction d'étendue X, **caractérisé en ce que** les moyens de coupe (11) sont continus le long de cette direction d'étendue X.

3. Élément de moulage selon la revendication 1, **caractérisé en ce que** les moyens de coupe (11) comprennent une pluralité de dents (13) aiguisées.
